# EUROPEAN PATENT APPLICATION

(11) **EP 4 806 737 A1**
(43) Date of publication of application: **16.09.2026**
(21) Application number: 25162776.6
(22) Date of filing: 11.03.2025
(51) Int. Cl.: B60T 7/20, B60T 8/17, B60T 8/32, B60T 8/34, B60T 13/26, B60T 13/38, B60T 13/66, B60T 13/68, B60T 17/22

(54) **ELECTRONIC PARKING BRAKE MODULE AND METHOD FOR OPERATING THE ELECTRONIC PARKING BRAKE MODULE**

(71) Applicant: KB Intellectual Property GmbH & Co. KG, 82049 Pullach (DE)
(72) Inventor: ZEMAN, Ferenc, 80809 München (DE)

(57) **Abstract**

An EPB module (1) comprises a first output device (5) providing a first control pressure for a spring brake chamber (2) of a parking brake cylinder, and a second output device (6) providing a second control pressure either according to a braked trailer strategy or according to an unbraked trailer strategy. The second control pressure controls a service brake of a trailer connected to a towing vehicle, wherein, in case of a control of the EPB module (1) in a parking situation, according to the braked trailer strategy, the second control pressure corresponds to the first control pressure such that the parking brake of the towing vehicle and the service brake of the trailer are actuated, and according to the unbraked trailer strategy, the second control pressure is different from the first control pressure such that the parking brake of the towing vehicle is actuated and the service brake of the trailer is not actuated.

## Description

The invention relates to an electronic parking brake module and a method for operating the electronic parking module, in particular, for commercial vehicles.

Up to now, electronic parking brake modules have been known, which parking brake modules either provide a braked trailer strategy, wherein, in case of a control of the electronic parking brake module in a parking situation, a control pressure of a trailer brake corresponds to a control pressure of a parking brake of a towing vehicle such that the parking brake of the towing vehicle and the brake of the trailer are actuated or an unbraked trailer strategy, wherein, in case of a control of the electronic parking brake module in a parking situation, the control pressure of the trailer brake is different from the control pressure of the parking brake of the towing vehicle such that the parking brake of the towing vehicle is actuated and the brake of the trailer is not actuated.

Therefore, for satisfying different requests of clients in view of the strategy, different products respectively providing one of the strategies are necessary.

However, there are requests to provide both trailer strategies in a single product to facilitate the production and the aftermarket.

Further, there is a request for electronic parking brake modules, wherein the trailer strategy can be selected according to operation modes of the vehicle.

Therefore, the object underlying the invention is to provide an electronic parking brake module capable of providing various parking brake strategies which can be selected in an easy manner.

The object is achieved by an electronic parking brake module according to claim 1 and methods according to claims 14 and 15. Advantageous further developments are included in the dependent claims.

According to an aspect of the invention, an electronic parking brake module comprises a first output device configured to provide a first control pressure for a spring brake chamber of a brake cylinder actuating a parking brake of a towing vehicle, and at least one second output device configured to provide a second control pressure either according to a braked trailer strategy or according to an unbraked trailer strategy. The second control pressure is configured to control a service brake of a trailer connected to the towing vehicle, wherein, according to the braked trailer strategy, in case of a control of the electronic parking brake module in a parking situation, the second control pressure corresponds to the first control pressure such that the parking brake of the towing vehicle and the service brake of the trailer are actuated, and according to the unbraked trailer strategy, in case of a control of the electronic parking brake module in a parking situation, the second control pressure is different from the first control pressure such that the parking brake of the towing vehicle is actuated and the service brake of the trailer is not actuated.

By the use of the electronic parking brake module providing a respective control pressure according to various parking brake strategies for a brake of a trailer by one or more output devices for the control pressure of one electronic parking brake module, only one electronic parking brake module is suitable for various parking brake strategies so that the provision of different parking brake modules or a modification of a parking brake module is not necessary and the production and aftermarket are facilitated and more cost-effective.

According to an advantageous implementation of the electronic parking brake module, it comprises two second output devices as being a braked trailer second output device configured to provide the second control pressure according to the braked trailer strategy and an unbraked trailer second output device configured to provide the second control pressure according to the unbraked trailer strategy, respectively.

In a further advantageous implementation of the electronic parking brake module, it comprises a supply pressure connection device configured to supply the electronic parking brake module with compressed air, an ambient air connection device configured to connect the electronic parking brake module with the ambient air, a control line connected to the first output device and connectable to the second output devices, a tractor control inlet valve configured to connect the supply pressure connection device and the control line when pressure increase in the control line is requested, a tractor control outlet valve configured to connect the ambient air connection device and the control line when pressure decrease in the control line is requested, a trailer braked valve configured to control the second control pressure according to the braked trailer strategy and having one input connected to the control line, another input connected to the supply pressure connection device, and an output connected to the second output device, wherein, according to the braked trailer strategy, the trailer braked valve is configured to connect the second output device and the control line in the parking situation, a trailer unbraked valve configured to control the second control pressure according to the unbraked trailer strategy and having one input connected to the control line, another input connected to the supply pressure connection device, and an output connected to the second output device, wherein, according to the unbraked trailer strategy, the trailer unbraked valve is configured to connect the second output device and the supply pressure connection device in the parking situation.

By a further advantageous implementation of the electronic parking brake module, the trailer braked valve and/or the trailer unbraked valve comprise(s) a 3/2-way valve.

In a further advantageous implementation of the electronic parking brake module, according to the braked trailer strategy and according to the unbraked trailer strategy, in case of a control of the electronic parking brake module in a proportional braking situation, the electronic parking brake module is configured to actuate the tractor control inlet valve and the tractor control outlet valve to achieve a requested air pressure in the control line.

Due to a further advantageous implementation of the electronic parking brake module, it comprises a non-return valve configured to be connected to the supply pressure connection and to prevent deflation of the electronic parking brake module in case of a supply defect.

Advantageously, a relay valve having a control volume connected to the tractor control inlet valve and the tractor control outlet valve and being configured to be controlled by the tractor control inlet valve and the tractor control outlet valve for connecting the supply pressure connection and the control line is provided.

Further advantageously, the relay valve is configured to be a bistable valve.

According to a further advantageous implementation of the electronic parking brake module, it comprises the electronic parking brake module having the additional features of anyone of the above described implementations of the electronic parking brake modules as being a core electronic parking brake module, and a switching module comprising two switching module input devices respectively connected to the braked trailer second output device of the core electronic parking brake module and the unbraked trailer second output device of the core electronic parking brake module, a switching module output device as being the second output device configured to provide the second control pressure either according to the braked trailer strategy or according to the unbraked trailer strategy, and a switching valve configured to connect the switching module output device and either the braked trailer second output device or the unbraked trailer second output device of the core electronic parking brake module.

Advantageously, the switching valve comprises a bistable valve.

Further advantageously, the switching valve comprises a 3/2-way valve.

In a further advantageous implementation of the electronic parking brake module, the core electronic parking brake module and the switching module are designed to be separate units connected by external fittings and pipes or hoses.

In another advantageous implementation of the electronic parking brake module, the core electronic parking brake module and the switching module are designed to be provided in one single housing having the first output device and the switching module output device provided on the housing.

According to a further aspect of the invention, a method for operating the electronic parking brake module comprises the steps: connecting a port of a trailer control module for controlling the service brake of the trailer and the second output device configured to provide the second control pressure according to the braked trailer strategy, and controlling the second control pressure according to the braked trailer strategy; and alternatively connecting the port of the trailer control module for controlling the service brake of the trailer to the second output device configured to provide the second control pressure according to the unbraked trailer strategy, and controlling the second control pressure according to the unbraked trailer strategy.

According to another further aspect of the invention, a method for operating the electronic parking brake module comprises the steps: connecting the brake of the trailer to the switching module output device configured to provide the second control pressure according to the braked trailer strategy or according to the unbraked trailer strategy, connecting the braked trailer second output device of the core electronic parking brake module and the switching module output device of the switching module by the switching valve, and controlling the second control pressure according to the braked trailer strategy, and alternatively, connecting the unbraked trailer second output device of the core electronic parking brake module and the switching module output device of the switching module by the switching valve, and controlling the second control pressure according to the unbraked trailer strategy.

Subsequently, the invention is elucidated by means of embodiments referring to the attached drawings.

In particular,
- Fig. 1: shows a diagram of a first embodiment of an electronic parking brake (EPB) module; and
- Fig. 2: shows a diagram of a second embodiment of an electronic parking brake (EPB) module.

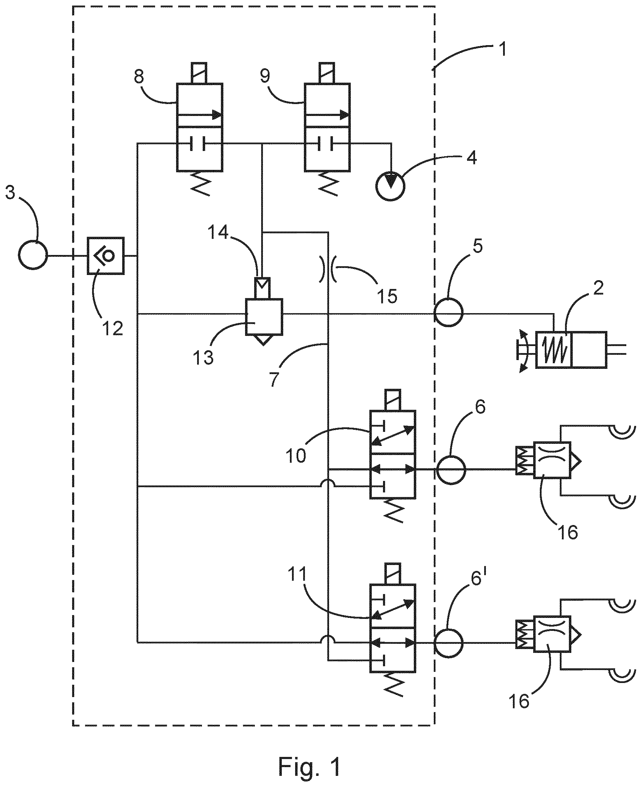

**Fig. 1** shows a diagram of a first embodiment of an electronic parking brake (EPB) module 1 for a brake system, in particular, a brake system of a commercial vehicle.

The EPB module 1 is configured to provide a first control pressure for a spring brake chamber 2 of a brake cylinder actuating a parking brake of a towing vehicle. Further, the EPB module 1 provides a second control pressure for controlling a brake of a trailer connected to the towing vehicle. The EPB module 1 specifically controls the parking brake pressure of the brakes of the towing vehicle and the service brakes of the trailer without performing further functions, as e.g. controlling an air treatment.

The EPB module 1 comprises a supply pressure connection device 3 which supplies the EPB module 1 with compressed air. Further, the EPB module 1 comprises an ambient air connection device 4 configured to connect the EPB module 1 with ambient air.

Furthermore, the EPB module 1 comprises a first output device 5 configured to provide a first control pressure for the spring brake chamber 2 of the brake cylinder actuating the parking brake of the towing vehicle.

Moreover, the EPB module 1 is provided with a second output device 6 configured to provide a second control pressure according to a braked trailer strategy, a so-called braked trailer second output device 6, and with a further second output device 6' configured to provide a second control pressure according to an unbraked trailer strategy, a so-called unbraked trailer second output device 6'. The second output device 6 and the further second output device 6' can alternatively be directly connected to a trailer control module 16 which controls the service brake system of the trailer either according to the braked trailer strategy or according to the unbraked trailer strategy.

According to the braked trailer strategy, in case of a control of the EPB module 1 in a parking situation, the second control pressure corresponds to the first control pressure such that the parking brake of the towing vehicle and the service brake of the trailer are actuated.

On the other hand, according to the unbraked trailer strategy, in case of a control of the EPB module 1 in a parking situation, the second control pressure is different from the first control pressure such that the parking brake of the towing vehicle is actuated and the service brake of the trailer is not actuated.

Further, the EPB module 1 comprises a control line 7 connected to the first output device 5 and connectable to the second output devices 6, 6'. For connecting the supply pressure connection device 3 to the control line 7, the EPB module 1 is provided with a so-called tractor control inlet valve 8, in particular, a magnet valve. The tractor control inlet valve 8 connects the supply pressure connection device 3 to the control line 7 when a pressure increase in the control line 7 is requested. For connecting the ambient air connection device 4 to the control line 7, the EPB module 1 is provided with a so-called tractor control outlet valve 9, in particular, a magnet valve. The tractor control outlet valve 9 connects the ambient air connection device 4 to the control line 7 when a pressure decrease in the control line 7 is requested.

The EPB module 1 further comprises a so-called trailer braked valve 10, in particular, a magnet valve, which is configured to connect the second output device 6 and the control line 7 in the parking situation according to the braked trailer strategy. Thereby, the trailer braked valve 10 controls the second control pressure according to the braked trailer strategy. The trailer braked valve 10 comprises one input connected to the control line 7, another input connected to the supply pressure connection device 3, and an output connected to the second output device 6.

The EPB module 1 also comprises a so-called unbraked trailer braked valve 11, in particular, a magnet valve, which is configured to connect the further second output device 6' and the supply pressure connection 3 in the parking situation according to the unbraked trailer strategy. Thereby, the trailer unbraked valve 11 controls the second control pressure according to the unbraked trailer strategy. The trailer unbraked valve 11 comprises one input connected to the control line 7, another input connected to the supply pressure connection device 3, and an output connected to the further second output device 6'. The trailer braked valve 10 and the trailer unbraked valve 11 respectively comprise a 3/2-way valve, in particular, a 3/2-way magnet valve. In alternative embodiments, the trailer braked valve 10 and the trailer unbraked valve 11 comprise another valve configuration, e.g. two 2/2-way valves.

Furthermore, the EPB module 1 comprises a non-return valve 12. The non-return valve 12 is connected to the supply pressure connection 3 and it is configured to prevent deflation of the EPB module 1 in case of a supply defect.

For assisting the supply of the control line 7 with compressed air, the EPB module 1 comprises a relay valve 13. The relay valve 13 has a control volume 14 connected to the tractor control inlet valve 8 and the tractor control outlet valve 9 and is configured to be controlled by the tractor control inlet valve 8 and the tractor control outlet valve 9 for connecting the supply pressure connection 3 and the control line 7. Further, the relay valve 13 comprises a further ambient air connection device which, in an alternative embodiment, is connected to the ambient air connection device 4 to provide one single ambient air connection for the EPB module 1. The relay valve is configured to be a bistable valve. To realize this bistable function, the EPB module 1 is provided in with a throttle 15 connecting the control line 7 and the control volume 14 of the relay valve 13. In alternative embodiments, the relay valve 13 is not provided as being a bistable valve or it is omitted.

In a situation in which the brake system is in a secondary braking situation, e.g. in case of a failure of the service brake system, according to the braked trailer strategy and according to the unbraked trailer strategy, the EPB module 1 is configured to actuate the tractor control inlet valve 8 and the tractor control outlet valve 9 to achieve a requested air pressure in the control line 7. In this second braking situation, in the braked trailer strategy, the control line 7 is connected to the second output device 6 by the released trailer braked valve 10 and, in the unbraked trailer strategy, the control line 7 is connected to the further second output device 6' by the activated trailer unbraked valve 11.

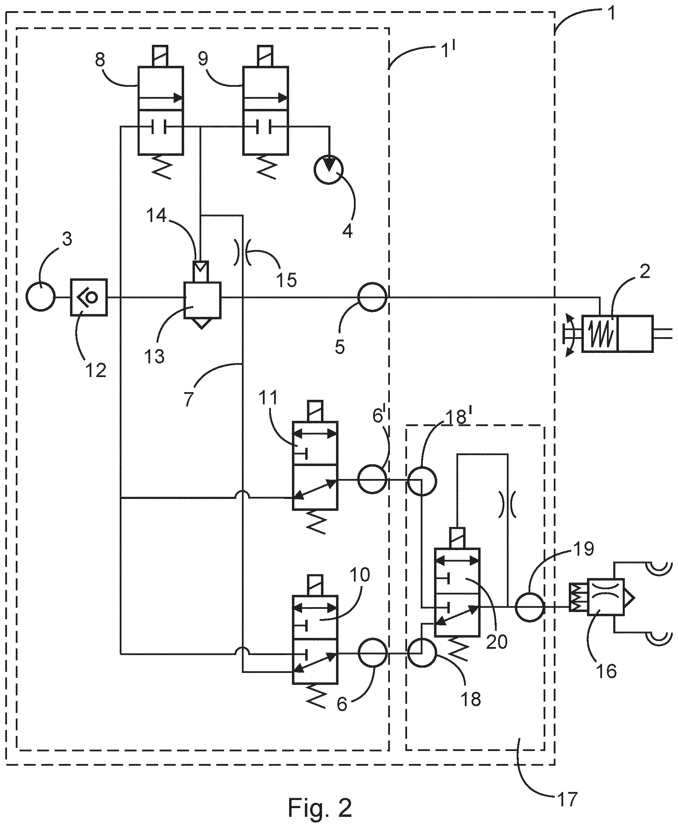

**Fig. 2** shows a diagram of a second embodiment of an EPB module 1. In this second embodiment, the EPB module 1 comprises a so-called core EPB module 1' which corresponds to the EPB module 1 according to the first embodiment. The EPB module 1 (Fig. 2) according to the second embodiment distinguishes from the EPB module 1 (Fig. 1) in that, in the first embodiment, the second output device 6 and the further second output device 6' can alternatively be directly connected to a trailer control module 16 which controls the service brake system of the trailer either according to the braked trailer strategy or according to the unbraked trailer strategy, whereas, according to the second embodiment, a switching module 17 to which the second output device 6 and the further second output device 6' are connected is provided.

The switching module 17 comprises two switching module input devices 18, 18' respectively connected to the braked trailer second output device 6 of the core electronic parking brake module 1' and the unbraked trailer second output device 6' of the core electronic parking brake module 1'.

The switching module 17 further comprises a switching module output device 19 as being the second output device configured to provide the second control pressure either according to the braked trailer strategy or according to the unbraked trailer strategy.

Therefore, the EPB module 1 according to the second embodiment also comprises a first output device 5 configured to provide a first control pressure for the spring brake chamber 2 of the brake cylinder actuating the parking brake of the towing vehicle, and at least one second output device 19 configured to provide the second control pressure either according to the braked trailer strategy or according to the unbraked trailer strategy, the second control pressure being configured to control the service brake of the trailer connected to the towing vehicle, wherein, according to the braked trailer strategy, in case of a control of the electronic parking brake module 1 in a parking situation, the second control pressure corresponds to the first control pressure such that the parking brake of the towing vehicle and the service brake of the trailer are actuated, and according to the unbraked trailer strategy, in case of a control of the electronic parking brake module 1 in a parking situation, the second control pressure is different from the first control pressure such that the parking brake of the towing vehicle is actuated and the service brake of the trailer is not actuated.

For switching the second control pressure between the second control pressure according to the braked trailer strategy to the second control pressure according to the unbraked trailer strategy, the switching module 17 is provided with a switching valve 20, in particular, a magnet valve, configured to connect the switching module output device 19 and either the braked trailer second output device 6 or the unbraked trailer second output device 6' of the core electronic parking brake module 1'. The switching valve 20 comprises a bistable 3/2-way valve. In alternative embodiments, a monostable valve and/or another valve configuration, e.g., two 2/2-way valves can be used.

The core electronic parking brake module 1' and the switching module 17 are designed to be provided in one single housing having the first output device 5 and the switching module output device 19 provided on the housing. Alternatively, the core electronic parking brake module 1' and the switching module 17 are designed to be separate units connected by external fittings and pipes or hoses.

In operation, a method for operating the EPB module 1 according to the first embodiment comprises the steps: connecting a port of a trailer control module for controlling the service brake of the trailer to the second output device 6 configured to provide the second control pressure according to the braked trailer strategy, and controlling the second control pressure according to the braked trailer strategy; and alternatively connecting the port of a trailer control module for controlling the service brake of the trailer to the second further output device 6' configured to provide the second control pressure according to the unbraked trailer strategy, and controlling the second control pressure according to the unbraked trailer strategy.

Alternatively, for operating the EPB module 1 according to the second embodiment, the method comprising the steps: connecting a port of a trailer control module for controlling the service brake of the trailer and the switching module output device 19 corresponding to the second output device configured to provide the second control pressure according to the braked trailer strategy or according to the unbraked trailer strategy; connecting the braked trailer second output device 6 of the core electronic parking brake module 1' to the switching module output device 19 of the switching module 17 by the switching valve 20 via the switching module input device 18, and controlling the second control pressure according to the braked trailer strategy, and alternatively, connecting the unbraked trailer second output device 6' of the core electronic parking brake module 1' to the switching module output device 19 of the switching module 17 by the switching valve 20 via the switching module input device 18', and controlling the second control pressure according to the unbraked trailer strategy.

Subsequently, further working modes of the EPB module 1 are described:
1. In the braked trailer strategy in the EPB module 1 according to the first embodiment:
   If the braked trailer strategy is selected, the trailer control module 16 of the towing vehicle must be connected to the second output device 6 of the EPB module 1. The further second output device 6' must be closed by a plug. The trailer unbraked valve 11 has no functional effect on the system behaviour in this configuration.
1.1 Parked state: The control volume 14 of the relay valve 13 and the control line 7 are both deflated to ambient pressure. The trailer braked valve 10 is kept inactivated to connect the pressure in the control line 7 to the second output device 6.
1.2 Released state: The control volume 14 of the relay valve 13 and the control line 7 are both inflated to supply pressure. The trailer braked valve 10 is kept inactivated to connect the pressure of the control line 7 to the second output device 6.
1.3 Parked-to-released transition: The tractor inlet valve 8 is activated to inflate the control volume 14 of the relay valve 13 and the control line 7 to supply pressure. The trailer braked valve 10 is kept inactivated to connect the pressure of the control line 7 to the second output device 6.
1.4 Released-to-parked transition: The tractor outlet valve 9 is activated to deflate the control volume 14 of the relay valve 13 and the control line 7 to ambient pressure. The trailer braked valve 10 is kept inactivated to connect the pressure of the control line 7 to the second output device 6.
1.5 Proportional braking: The tractor inlet valve 8 and the tractor outlet valve 9 are activated in a specific order to reach the requested pressure in the control volume 14 of the relay valve 13 and the control line 7. The trailer braked valve 10 is kept inactivated to connect the pressure of the control line 7 to the second output device 6.
1.6 Trailer test: - The control volume 14 of the relay valve 13 and the control line 7 are both deflated to ambient pressure. The trailer braked valve 10 is activated to connect the supply pressure to the second output device 6.
2. In the unbraked trailer strategy in the EPB module 1 according to the first embodiment:
   If the unbraked trailer strategy is selected, the trailer control module 16 of the towing vehicle must be connected to the further second output device 6' of the EPB module 1.
   The second output device 6 must be closed by a plug. The trailer braked valve 10 has no functional effect on the system behaviour in this configuration.
2.1 Parked state: The control volume 14 of the relay valve 13 and the control line 7 are both deflated to ambient pressure. The trailer unbraked valve 11 is kept inactivated to connect the supply pressure to the further second output device 6'.
2.2 Released state: The control volume 14 of the relay valve 13 and the control line 7 are both inflated to supply pressure. The trailer unbraked valve 11 is kept inactivated to connect the supply pressure to the further second output device 6'.
2.3 Parked-to-released transition: The towing vehicle inlet valve 8 is activated to inflate the control volume 14 of the relay valve 13 and the control line 7 to supply pressure. The trailer unbraked valve 11 is kept inactivated to connect the supply pressure to the further second output device 6'.
2.4 Released-to-parked transition: The tractor outlet valve 9 is activated to deflate the control volume 14 of the relay valve 13 and the control line 7 to ambient pressure. The trailer unbraked valve 11 is kept inactivated to connect the supply pressure to the further second output device 6'.
2.5 Proportional braking: The tractor inlet valve 8 and the tractor outlet valve 9 are activated in a specific order to reach the requested pressure in the control volume 14 of the relay valve 13 and the control line 7. The trailer unbraked valve 11 is activated to connect the pressure of the control line 7 to the further second output device 6'.
3. In the braked trailer strategy in the EPB module according to the second embodiment:
   If the braked trailer strategy is selected, the trailer control module 16 of the tractor must be connected to the switching module output device 19 of the EPB module 1.
3.1 Parked state: The control volume 14 of the relay valve 13, the control line 7 and a control volume of the switching valve 20 are all deflated to ambient pressure. All of the tractor inlet valve 8, the tractor outlet valve 9, the trailer braked valve 10, and the trailer unbraked valve 11 are kept inactivated. The pressure in the control line 7 is connected via the trailer braked valve 10 and the switching valve 20 in an unpressurized state to the switching module output device 19 (second output device).
3.2 Released state: The control volume 14 of the relay valve 13, the control line 7 and the control volume of the switching valve 20 are all inflated to supply pressure. All of the tractor inlet valve 8, the tractor outlet valve 9, the trailer braked valve 10, and the trailer unbraked valve 11 are kept inactivated. The supply pressure is connected via the trailer unbraked valve 11 and the switching valve 20 in a pressurized state to the switching module output device 19 (second output device).
3.3 Parked-to-released transition: The tractor inlet valve 8 is activated to inflate the control volume 14 of the relay valve 13 and the control line 7 to supply pressure. The control volume of the switching valve 20 is inflated to supply pressure via the trailer braked valve 10. The switching valve 20 is changing from unpressurized to pressurized state, connecting the supply pressure from the second output device 6 of the core **EPB** module 1' to the switching module output device 19 (second output device).
3.4 Released-to-parked transition: The tractor outlet valve 9 is activated to deflate the control volume 14 of the relay valve 13 and the control line 7 to ambient pressure. The trailer unbraked valve 11 is activated to connect the pressure of the control line 7 to the further second output device 6'. The control volume of the switching valve 20 is deflated to ambient pressure, switching back the valve to unpressurized state, and connecting the second output device 6 of the core EPB module 1' to the switching module output device 19 (second output device).
3.5 Proportional braking: The tractor inlet valve 8 and the tractor outlet valve 9 are activated in a specific order to reach the requested pressure in the control volume 14 of the relay valve 13 and the control line 7. The trailer unbraked valve 11 is kept activated to connect the pressure of the control line 7 to the further second output device 6' and via the switching valve 20 to the switching module output device 19 (second output device).
3.6 Trailer test: - The control volume 14 of the relay valve 13 and the control line 7 are both deflated to ambient pressure. The trailer braked valve 10 is activated to connect the supply pressure to the second output device 6. The switching valve 20 is switched to pressurized state, connecting the supply pressure from the further second output device 6' of the core EPB module 1' to the to the switching module output device 19 (second output device). When the trailer test is finished, the trailer unbraked valve 11 is activated, connecting the deflated control line 7 to the further second output device 6' of the core EPB module 1'. The switching valve 20 is switching to the unpressurized state.
4. In the unbraked trailer strategy in the EPB module according to the second embodiment:
   If the unbraked trailer strategy is selected, the trailer control module 16 of the towing vehicle must be connected to the switching module output device 19 of the EPB module 1.
4.1 Parked state: The control volume 14 of the relay valve 13, the control line 7 and the control volume of the switching valve 20 are all deflated to ambient pressure. All of the tractor inlet valve 8, the tractor outlet valve 9, the trailer braked valve 10, and the trailer unbraked valve 11 are kept inactivated. Supply pressure is connected via the trailer unbraked valve 11 and the switching valve 20 in a pressurized state to the switching module output device 19 (second output device).
4.2 Released state: The control volume 14 of the relay valve 13, the control line 7 and the control volume of the switching valve 20 are all inflated to supply pressure. All of the tractor inlet valve 8, the tractor outlet valve 9, the trailer braked valve 10, and the trailer unbraked valve 11 are kept inactivated. The supply pressure is connected via the trailer unbraked valve 11 and the switching valve 20 in a pressurized state to the switching module output device 19 (second output device).
4.3 Parked-to-released transition: The tractor inlet valve 8 is activated to inflate the control volume 14 of the relay valve 13 and the control line 7 to supply pressure. The switching valve 20 is kept in a pressurized state, connecting the supply pressure from the further second output device 6' of the core EPB module 1' to the switching module output device 19 (second output device).
4.4 Released-to-parked transition: The tractor outlet valve 9 is activated to deflate the control volume 14 of the relay valve 13 and the control line 7 to ambient pressure. The trailer unbraked valve 11 is kept inactivated to connect the supply pressure to a control port of the switching valve 20 keeping it in pressurized state and connecting the supply pressure to the switching module output device 19 (second output device).
4.5 Proportional braking: The tractor inlet valve 8 and the tractor outlet valve 9 are activated in a specific order to reach the requested pressure in the control volume 14 of the relay valve 13 and the control line 7. The trailer unbraked valve 11 is activated to connect the pressure of the control line 7 to the further second output device 6' and via the switching valve 20 to the switching module output device 19 (second output device).

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

### REFERENCE SIGNS

- 1: electronic parking brake module (EPB module)
- 1': core EPB module
- 2: spring brake chamber
- 3: supply pressure connection device
- 4: ambient air connection device
- 5: first output device
- 6: second output device
- 6': further second output device
- 7: control line
- 8: tractor inlet valve
- 9: tractor outlet valve
- 10: trailer braked valve
- 11: trailer unbraked valve
- 12: non-return valve
- 13: relay valve
- 14: relay valve control volume
- 15: throttle
- 16: trailer control module
- 17: switching module
- 18, 18': switching module input device
- 19: switching module output device
- 20: switching valve

## Claims

1. An electronic parking brake module (1) comprising
a first output device (5) configured to provide a first control pressure for a spring brake chamber (2) of a brake cylinder actuating a parking brake of a towing vehicle, and
at least one second output device (6) configured to provide a second control pressure either according to a braked trailer strategy or according to an unbraked trailer strategy, the second control pressure being configured to control a service brake of a trailer connected to the towing vehicle,
wherein,
according to the braked trailer strategy, in case of a control of the electronic parking brake module (1) in a parking situation, the second control pressure corresponds to the first control pressure such that the parking brake of the towing vehicle and the service brake of the trailer are actuated, and
according to the unbraked trailer strategy, in case of a control of the electronic parking brake module (1) in a parking situation, the second control pressure is different from the first control pressure such that the parking brake of the towing vehicle is actuated and the service brake of the trailer is not actuated.

2. The electronic parking brake module (1) of claim 1, wherein
the electronic parking brake module (1) comprises two second output devices (6, 6') as being a braked trailer second output device (6) configured to provide the second control pressure according to the braked trailer strategy and an unbraked trailer second output device (6') configured to provide the second control pressure according to the unbraked trailer strategy, respectively.

3. The electronic parking brake module (1) of claim 2, wherein
the electronic parking brake module (1) comprises
a supply pressure connection device (3) configured to supply the electronic parking brake module (1) with compressed air,
an ambient air connection device (4) configured to connect the electronic parking brake module (1) with ambient air,
a control line (7) connected to the first output device (5) and connectable to the second output devices (6),
a tractor control inlet valve (8) configured to connect the supply pressure connection device (3) and the control line (7) when pressure increase in the control line (7) is requested,
a tractor control outlet valve (9) configured to connect the ambient air connection device (4) and the control line (7) when pressure decrease in the control line (7) is requested,
a trailer braked valve (10) configured to control the second control pressure according to the braked trailer strategy and having one input connected to the control line (7), another input connected to the supply pressure connection device (3), and an output connected to the second output device (6), wherein, according to the braked trailer strategy, the trailer braked valve (10) is configured to connect the second output device (6) and the control line (7) in the parking situation,
a trailer unbraked valve (11) configured to control the second control pressure according to the unbraked trailer strategy and having one input connected to the control line (7), another input connected to the supply pressure connection device (3), and an output connected to the further second output device (6'), wherein, according to the unbraked trailer strategy, the trailer unbraked valve (11) is configured to connect the further second output device (6') and the supply pressure connection (3) in the parking situation.

4. The electronic parking brake module of claim 3, wherein
the trailer braked valve (10) and/or the trailer unbraked valve (11) comprise(s) a 3/2-way valve.

5. The electronic parking brake module (1) of claim 3 or 4, wherein,
according to the braked trailer strategy and according to the unbraked trailer strategy, in case of a control of the electronic parking brake module in a proportional braking situation, the electronic parking brake module (1) is configured to actuate the tractor control inlet valve (8) and the tractor control outlet valve (9) to achieve a requested air pressure in the control line (7).

6. The electronic parking brake module (1) of anyone of claims 3 to 5, wherein
the electronic parking brake module comprises a non-return valve (12) configured to be connected to the supply pressure connection (3) and to prevent deflation of the electronic parking brake module (1) in case of a supply defect.

7. The electronic parking brake module (1) of anyone of claims 3 to 6, wherein
a relay valve (13) having a control volume (14) connected to the tractor control inlet valve (8) and the tractor control outlet valve (9) and being configured to be controlled by the tractor control inlet valve (8) and the tractor control outlet valve (9) for connecting the supply pressure connection and the control line (7) is provided.

8. The electronic parking brake module (1) of claim 7, wherein the relay valve (13) is configured to be a bistable valve.

9. The electronic parking brake module (1) of claim 1 comprising
the electronic parking brake module having the additional features of anyone of claims 2 to 8 as being a core electronic parking brake module (1'), and
a switching module (17) comprising
two switching module input devices (18, 18') respectively connected to the braked trailer second output device (6) of the core electronic parking brake module (1') and the unbraked trailer second output device (6') of the core electronic parking brake module (1'),
a switching module output device (19) as being the second output device configured to provide the second control pressure either according to the braked trailer strategy or according to the unbraked trailer strategy, and
a switching valve (20) configured to connect the switching module output device (19) and either the braked trailer second output device (6) or the unbraked trailer second output device (6') of the core electronic parking brake module (1').

10. The electronic parking brake module (1) of claim 9, wherein the switching valve (20) comprises a bistable valve.

11. The electronic parking brake module (1) of claim 9 or 10, wherein the switching valve (20) comprises a 3/2-way valve.

12. The electronic parking brake module (1) of anyone of claims 9 to 11, wherein the core electronic parking brake module (1') and the switching module (17) are designed to be separate units connected by external fittings and pipes or hoses.

13. The electronic parking brake module (1) of anyone of claims 9 to 11, wherein the core electronic parking brake module (1') and the switching module (17) are designed to be provided in one single housing having the first output device (5) and the switching module output device (19) provided on the housing.

14. A method for operating an electronic parking brake module (1) according to anyone of the claims 2 to 8, the method comprising the steps:
connecting a port of a trailer control module for controlling the service brake of the trailer to the second output device (6) configured to provide the second control pressure according to the braked trailer strategy, and controlling the second control pressure according to the braked trailer strategy; and
alternatively connecting the port of the trailer control module for controlling the service brake of the trailer to the further second output device (6') configured to provide the second control pressure according to the unbraked trailer strategy, and controlling the second control pressure according to the unbraked trailer strategy.

15. A method for operating an electronic parking brake module (1) according to anyone of the claims 9 to 13, the method comprising the steps:
connecting a port of a trailer control module for controlling the service brake of the trailer and the switching module output device (19) configured to provide the second control pressure according to the braked trailer strategy or according to the unbraked trailer strategy;
connecting the braked trailer second output device (6) of the core electronic parking brake module (1') and the switching module output device (19) of the switching module (17) by the switching valve (20), and controlling the second control pressure according to the braked trailer strategy; and
alternatively, connecting the unbraked trailer second output device (6') of the core electronic parking brake module (1') and the switching module output device (19) of the switching module (17) by the switching valve (20), and controlling the second control pressure according to the unbraked trailer strategy.
